# EUROPÄISCHE PATENTSCHRIFT

(11) **EP 1 548 907 B1**
(45) Veröffentlichungstag und Bekanntmachung des Hinweises auf die Patenterteilung: **15.05.2013**
(21) Anmeldenummer: 04029406.8
(22) Anmeldetag: 11.12.2004
(51) Int. Cl.: H02B 1/48

(54) **Anordnung zum Befestigen von elektrischen und/oder elektronischen Leistungsbauteilen an einer Platine und Gehäuse hiermit**
Mounting system for electronic/electric components on a board and box provided with said system
Dispositif de fixation de composants électroniques/électriques sur une platine et boîtier avec ce dispositif

(30) Priorität: 23.12.2003 DE 10361452
(43) Veröffentlichungstag der Anmeldung: 29.06.2005
(73) Patentinhaber: Demag Cranes & Components GmbH, 58300 Wetter (DE)
(72) Erfinder: Kohlenberg, Thomas, 33102 Paderborn (DE); Grieb, Eckerhardt, 58093 Hagen (DE)
(74) Vertreter: Moser & Götze

(56) Entgegenhaltungen:
- EP-A- 1 369 305
- DE-A1- 2 942 771
- DE-U1- 9 415 823
- DE-U1- 29 710 415
- GB-A- 2 171 846
- US-A- 5 253 143

## Beschreibung

Die Erfindung betrifft eine Anordnung zum Befestigen von elektrischen und/oder elektronischen Leistungsbauteilen, an einer Platine. Auch betrifft die Erfindung ein Gehäuse zur Aufnahme von elektrischen und/oder elektronischen Leistungsbauteilen, insbesondere zur Aufnahme der Steuerungs- und Leistungsbauteile für ein Hubwerk, mit der vorgenannten Anordnung.

Aus dem Stand der Technik ist allgemein bekannt, dass elektromotorisch angetriebene Maschinen, wie beispielsweise Hubwerke, mit einem Elektrokasten versehen sind. In dem Elektrokasten sind elektrische und/oder elektronische Steuerund Leistungsbausteine angeordnet, über die im Wesentlichen die Energieversorgung sowie die Steuerung der Elektromotoren, wie beispielsweise Hub- und Fahrmotoren der Hubwerke, realisiert werden. Auch haben diese Steuerund Leistungsbausteine die Aufgabe, optionale Zusatzfunktionen zu leisten, wie etwa ein Überwachen von Kontroll- und/oder Endschaltern, ein Auswerten von Sensoren oder ein Ansteuern einer Signalvorrichtung, wie beispielsweise einer Signalhupe.

Als Leistungsbausteine kommen in üblicher Weise elektromechanische Bauteile, wie beispielsweise Schütze, zum Einsatz, um die Versorgungsströme der Elektromotore zu schalten, sowie Wendeschütze, Polumschaltschütze, Leistungsschutzschalter, Motorschutzschalter, Sicherungen für Nennspannungen und Transformatoren. Die Steuerungsbauteile sind zumeist aus elektronischen Komponenten gebildet. Die Leistungsbausteine sind überwiegend konventionell verdrahtet und über solche Verdrahtungen mit den in separaten kleinen Gehäusen befindlichen elektronischen Komponenten der Steuerungsbauteile elektrisch verbunden.

In einem sogenannten gehäuseförmigen Elektrokasten ist die gesamte Elektrik der Maschine untergebracht, um sie vor Umwelteinflüssen in Form von Feuchtigkeit oder Witterungen zu schützen. Weiterhin schützt der Elektrokasten Personen, die bei der Bedienung des Geräts mit der Elektrik in Berührung kommen könnten, vor einem elektrischen Schlag. Der Elektrokasten weist einen Deckel auf und lässt sich öffnen und wieder verschließen, um die Elektrik zu installieren und später auch warten zu können. Die Deckel sind in üblicher Weise mit dem Elektrokasten verschraubt und haben lediglich die Aufgabe den Elektrokasten abdichtend zu verschließen. Der Elektrokasten ist eine Blechkonstruktion, wie sie im Schaltschrankbau bekannt ist, oder eine Kunststoffkonstruktion. Die Aufnahme beziehungsweise Befestigung der Elektrik in dem Elektrokasten erfolgt mit der sogenannten Hutschienentechnik. Bei dieser Technik werden auf entsprechend ausgeformte standardisierte Hutschienen die einzelnen Komponenten, Bausteine und Klemmleisten aufgeschnappt und anschließend konventionell verdrahtet. Bei diesem Aufbau müssen spezielle Anforderungen an die elektrische Isolation eingehalten werden. Die Einhaltung der Isolationsklassen sowie der geforderten Luft- und Kriechstrecken erfordert entsprechenden Aufwand. Hier haben Kunststoffkonstruktionen den Vorteil, dass die geforderten Isolationsklassen sich leichter einhalten lassen.

Die Verbindung der Elektrik mit den elektrischen Komponenten der Maschine, insbesondere des Hubwerkes, sowie mit der externen Energieversorgung und mit den Steuerleitungen erfolgt über Kabel, die gedichtet in das Elektrogehäuse geführt und dort mit entsprechenden Klemmleisten an Schraub- oder Klemmkontakten angeschlossen werden.

Die bekannten Lösungen bieten nicht die Möglichkeit, die komplette Elektrik einfach auszutauschen. Dementsprechend ist die Elektrik nur aufwendig zu warten oder zu reparieren. Außerdem baut der zuvor beschriebene Aufbau der Elektrik meist sehr groß und besteht aus vielen aufwendig zu montierenden Komponenten. Die Herstellung ist daher mit viel Handarbeit verbunden und entsprechend lohnintensiv.

Des Weiteren ist aus der deutschen Offenlegungsschrift DE 36 13 863 A1 eine Befestigungseinrichtung für elektrische Bauteile, insbesondere einer Motordrossel zur Funkentstörung und/oder Stromdämpfung bei elektrischen Geräten, auf einer Trägerplatte bekannt. Die Motordrossel ist als Ringkerndrossel mit zwei Ringkernen und einer entsprechenden elektrischen Wicklung ausgebildet. Das elektrische Bauteil weist ein Gehäuse auf, vom dem auf der der Trägerplatte, insbesondere eine Leiter- oder Printplatte, zugewandten Seite Befestigungs- und Verriegelungsmittel ausgehen. Diese Befestigungs- und Verriegelungsmittel bestehen im Wesentlichen aus einem Rastbein und einem Fixierbein, die jeweils ausgehend von dem Gehäuse des elektronischen Bauteils sich in Richtung der Trägerplatte erstrecken. Das Rastbein ist in einen sich von dem Gehäuse erstreckenden Steg und einer an seinem freien Ende angeordneten Rastnase aufgeteilt. In der Trägerplatte sind korrespondierend zu dem Querschnitt der Rastnase Öffnungen angeordnet, in die die Rastbeine eingesteckt werden und dort durch rückfederndes Hintergreifen der Trägerplatte durch die Rastnase verriegelt werden. Das zu jedem Rastbein benachbart angeordnete Fixierbein hat die Aufgaben, einerseits als Widerlager zu der Rastnase dienen und somit den Abstand zwischen dem Gehäuse und der Trägerplatte festzulegen sowie andererseits zusätzlich in die Öffnung der Trägerplatte für die Rastnase einzudringen und somit die Rastnase zu verriegeln. Die Befestigungs- und Verriegelungsmittel sind gleichmäßig auf dem Umfang des Gehäuses verteilt; bei dem runden Gehäuse der Motordrossel sind beispielsweise sechs Befestigungs- und Verriegelungsmittel vorgesehen. Entsprechend sind sechs Öffnungen in der Trägerplatte vorgesehen. Nachdem das elektrische Bauteil auf der Trägerplatte fixiert ist, wird deren bereits abisolierte Anschlussleitung in üblicher Weise in eine vorgesehene Bohrung der Trägerplatte und dort mit dieser verlötet.

Ferner ist aus dem deutschen Patent DE 717 067 eine Vorrichtung zum Befestigen eines Spulenkörpers, insbesondere für Hochfrequenzspulensätze von Rundfunkempfängern, an einer zugehörigen Grundplatte bekannt. Für die Befestigung wird der Spulenkörper in einen geschlitzten Ring gesteckt, der eine exzentrische Umfangsfläche aufweist. In der Grundplatte ist eine Bohrung für die Aufnahme des Ringes vorgesehen, die ebenfalls exzentrisch ist. Über ein Verdrehen des Ringes in der Bohrung kann somit ein Festklemmen des Spulenkörpers über den Ring in der Bohrung erreicht werden. Durch die DE 930 321 ist ein Halteteil für eine Spule Unit Kern bekannt geworden.

Der Erfindung liegt die Aufgabe zu Grunde eine Anordnung zum Befestigen von elektrischen und/oder elektronischen Leistungsbauteilen, an einer Platine sowie ein Gehäuse zur Aufnahme von elektrischen und/oder elektronischen Bauteilen, insbesondere zur Aufnahme der Steuerungs- und Leistungsbauteile für ein Hubwerk, mit der vorgenannten Anordnung zu schaffen, die eine Montage und Wartung der elektrischen und/oder elektronischen Bauteile erleichtert.

Diese Aufgabe wird durch eine Anordnung zum Befestigen von elektrischen und/oder elektronischen Leistungsbauteilen, an einer Platine mit den Merkmalen des Anspruches 1 gelöst. Vorteilhafte Ausgestaltungen der Erfindung sind in den Unteransprüchen 2 bis 12 angegeben.

Erfindungsgemäß wird bei einer Anordnung zum Befestigen von elektrischen und/oder elektronischen Leistungsbauteilen an einer Platine, wobei die elektrischen und/oder elektronischen Leistungsbauteile mechanisch und lösbar an der Platine befestigt sind, eine Montage- und Wartungserleichterung dadurch erreicht, dass die Leistungsbauteile für ihren elektrischen Anschluss Steck- und/oder Klemmverbindungselemente aufweisen und über elektrische Leitungen mit vorzugsweise auf der Platine angeordneten Steck- und/oder Klemmleisten elektrisch mit der Platine verbindbar sind. Die somit geschaffene, auch die Leistungsbauteile umfassende Baueinheit ist insgesamt leicht zu handhaben. Da die elektrischen und/oder elektronischen Leistungsbauteile über elektrischen Leitungen mit der Platine verdrahtet sind, müssen für einen Austausch der gesamten Platine diese Verdrahtungen nicht gelöst werden.

Gemäß einer ersten Ausführungsform sind in der Platine Aussparungen angeordnet, in die elektrische und/oder elektronische Leistungsbauteilen mechanisch und lösbar eingesteckt sind und deren Abmessungen an die Außenabmessungen der elektrischen und/oder elektronischen Leistungsbauteile angepasst sind. Somit besteht die Möglichkeit unterschiedlichste elektrische und/oder elektronische Leistungsbauteile mit einer Platine zu verbinden, um somit eine Baueinheit zu schaffen, die für die Montage vormontiert und im Wartungs- beziehungsweise Reparaturfalle komplett vor Ort komplett gewechselt werden kann. Die Aussparungen dienen als besonders einfache formschlüssige Halterungen für die elektrischen und/oder elektronischen Leistungsbauteile, die üblicher Weise an Hutschienen außerhalb der Platine angeordnet werden und über elektrische Leitungen dann erst bei der Montage mit der Platine mit weiteren darauf angeordneten elektrischen und/oder elektronischen Bauteilen verbunden werden. Die elektrischen und/oder elektronischen Leistungsbauteile ruhen somit mit geringem Spiel zwischen ihrer Außenwand und dem Innenrand der Aussparung

In einer zweiten Ausführungsform wird die bekannte Hutschiene direkt auf der Platine angeordnet, an der dann die elektrischen und/oder elektronischen Leistungsbauteile mechanisch und lösbar befestigt sind. Auch hierdurch wird die zuvor beschriebene vorteilhafte Baueinheit geschaffen. In Abkehr vom Stand der Technik wird hier dann die Hutschiene direkt auf der Platine angeordnet, die eigentlich ausschließlich der Aufnahme der elektrischen und/oder elektronischen Steuerungsbauteile dient.

Im Sinne der vorliegenden Erfindung sind unter Leistungsbauteilen Schütze, um die Versorgungsströme der Elektromotore zu schalten, Wendeschütze, Polumschaltschütze, Leistungsschutzschalter, Motorschutzschalter, Sicherungen für Nennspannungen und Transformatoren zu verstehen. Gegenüber den anderen elektrischen und/oder elektronischen Bauteilen, insbesondere Steuerungsbauteilen, zeichnen sich die Leistungsbauteile im Wesentlichen dadurch aus, dass diese eine Gewicht größer 100 bis 200g haben, zumeist größer als 40x40x50mm sind, die elektrische Verbindung über Steck- oder Schraubverbindungen erfolgt und zur mechanischen Fixierung an Hutschienen ein Schnappmechanismus oder Bohrungen zum Festschrauben vorgesehen sind. Auch sind die Leistungsbauteile meist komplexerer Natur und weisen somit mehrere Bauteile und ein eigenes Gehäuse auf.

In besonders vorteilhafter Weise sind die elektrischen und/oder elektronischen Leistungsbauteile über Schnappverbindungen lösbar in den Aussparungen beziehungsweise an der Hutschiene gehalten.

Besonders eignet sich diese Platine für einen Einbau in ein Gehäuse zur Aufnahme von elektrischen und/oder elektronischen Bauteilen, insbesondere zur Aufnahme der Steuerungs- und Leistungsbauteile für ein Hubwerk. Hierbei ist dann die Platine zumindest im Bereich der Aussparungen beziehungsweise der Hutschienen über Auflageelemente abgestützt, die mit dem Gehäuse verbunden sind. Somit kann eine herkömmliche Platine auch zum Tragen der schwereren Leistungsbauteile verwendet werden. Die nötige Stabilität bezieht die Platine dann über die Abstützung auf den Auflageelementen.

In bevorzugter Ausgestaltung ist vorgesehen, dass die Auflageelemente an der Innenseite der Deckelplatte des Gehäuses angeordnet und stiftförmig sind sowie die Platine und die elektrischen und/oder elektronischen Bauteilen durch die Auflageelemente von der Deckelplatte des Gehäuses beabstandet sind.

Vorzugsweise besteht das Gehäuse aus einem wannenförmigen Grundteil und einem wannenförmigen Deckel und die Platine ist in dem Deckel angeordnet. Der Deckel ist über ein Gelenk verschwenkbar mit dem Grundteil verbunden sowie über das Gelenk von dem Grundteil lösbar. Diese Konstruktion erlaubt für Montagezwecke den Deckel mit der Platine von der Maschine zu lösen.

Unterstützt wird dies dadurch, dass auf der Platine mindestens eine Steckerbuchse und mindestens eine Steck- und/oder Klemmleiste angeordnet sind, über die die Platine mit elektrischen und/oder elektronischen Steuerungs- und Leistungsbauteilen im Grundteil des Gehäuses und mit elektrischen Verbraucher außerhalb des Gehäuses verbindbar ist

Zur weiteren Montageerleichterung ist die Steckerbuchse der Platine durch eine Öffnung im Gehäuse von außen zugänglich.

Da das Gehäuse aus elektrisch nicht leitendem Werkstoff und ein Kunststoffspritzgussteil ist, können leicht die Anforderungen an die elektrische Isolation erfüllt werden.

Nachfolgend wird die Erfindung an Hand eines in einer Zeichnung dargestellten Ausführungsbeispiels näher erläutert. Es zeigen:
- Figur 1: eine perspektivische Ansicht eines Gehäuses zur Aufnahme von elektrischen und/oder elektronischen Bauteilen, insbesondere zur Aufnahme der Steuerungs- und Leistungsbauteile für ein Hubwerk,
- Figur 2: ein Gehäuse nach Figur 1 mit teilweise aufgeschnittenen Deckel in einer ersten Ausführungsform,
- Figur 3: einen Querschnitt durch den Deckel nach Figur 2,
- Figur 4: eine Draufsicht auf den Innenbereich des Deckels nach Figur 2,
- Figur 5: ein Gehäuse nach Figur 1 mit teilweise aufgeschnittenen Deckel in einer zweiten Ausführungsform,
- Figur 6: einen Querschnitt durch den Deckel nach Figur 5,
- Figur 7: eine Draufsicht auf den Innenbereich des Deckels nach Figur 5 und
- Figur 8: eine Draufsicht auf den Innenbereich des Grundteils des Gehäuses nach Figur 1.

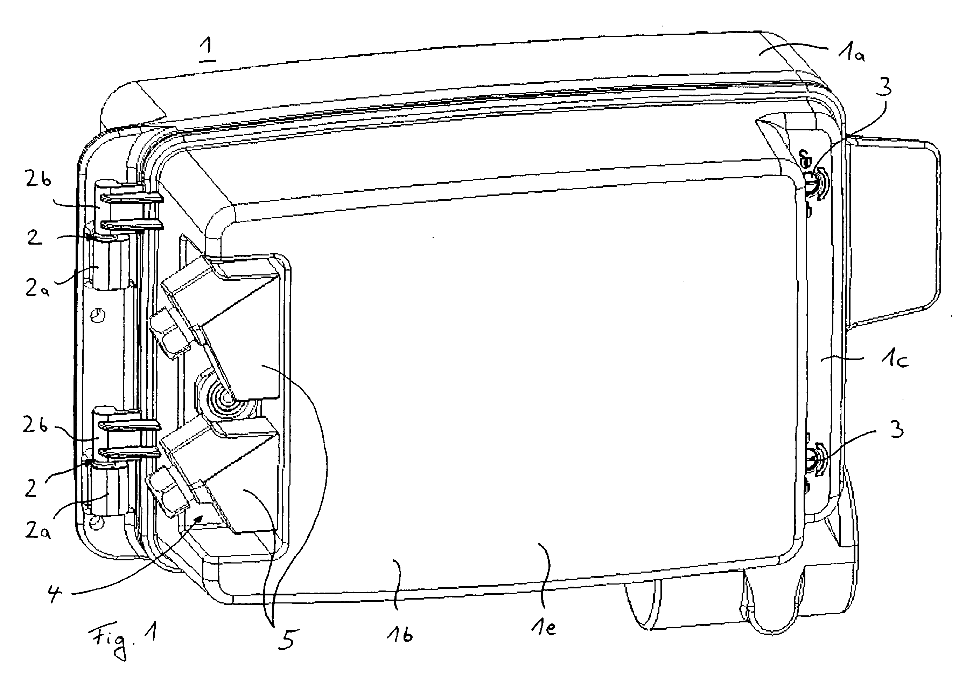

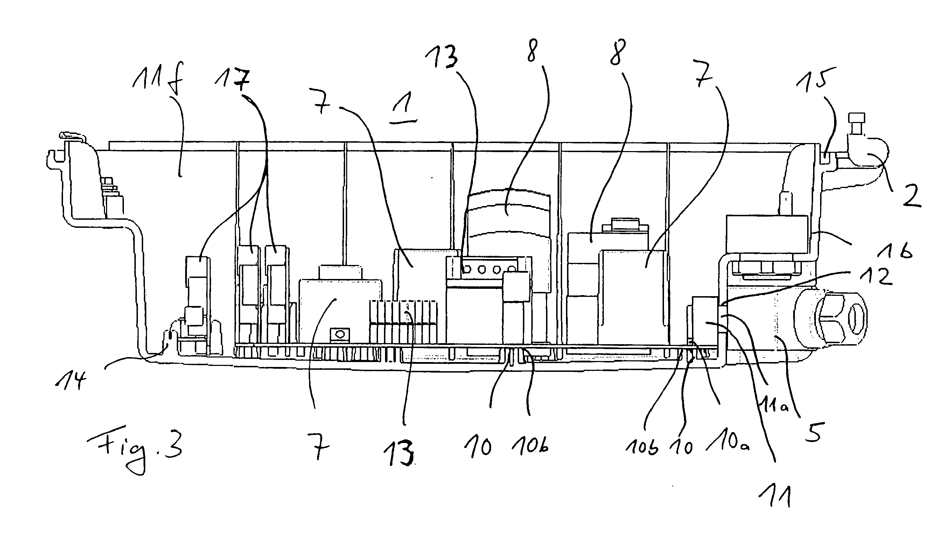

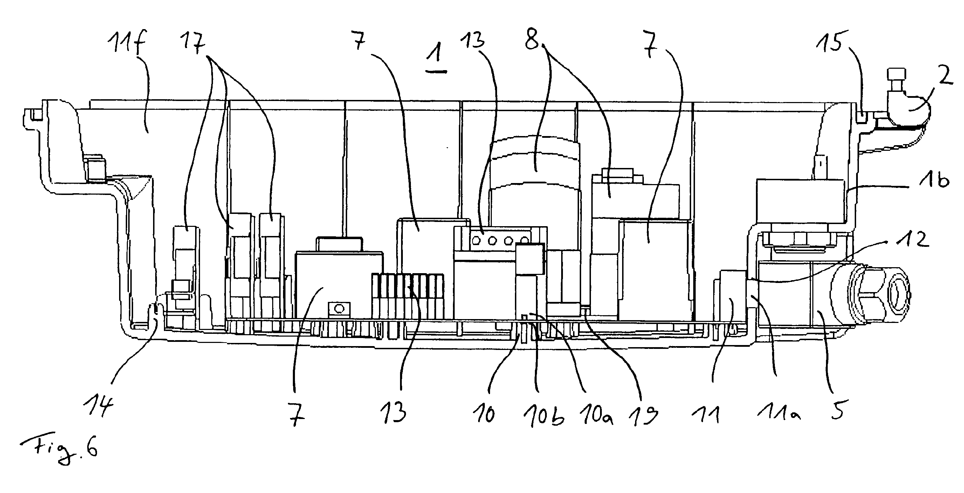

Die Figur 1 zeigt eine perspektivische Ansicht eines Gehäuses 1 zur Aufnahme von elektrischen und/oder elektronischen Bauteilen in Form von Steuerungs- 7 und Leistungsbauteilen 8 (siehe Figuren 3 und 6) für ein nicht dargestelltes Hubwerk. Das Gehäuse besteht im Wesentlichen aus einem kasten- beziehungsweise haubenförmigen Grundteil 1a, das von einem mit seiner Öffnung dem Grundteil 1a zugewandten ebenfalls kasten- beziehungsweise haubenförmigen Deckel 1b verschlossen ist. Das Grundteil 1a ist teilweise integraler Bestandteil des Hubwerkes wie bei der vorgestellten Lösung auch. An dem Grundteil 1a ist über ein scharnierartiges Gelenk 2 der Deckel 1b schwenkbar befestigt. Das Gelenk 2 ist so ausgebildet, dass für Montage- oder Reparaturzwecke der Deckel 1b von dem Grundteil 1a getrennt werden kann. In üblicher Weise verbleibt dann der nicht gezeigte Verbindungsstift in der einer Öse des ersten Gelenkteils 2a und gleitet aus der anderen Öse des zweiten Gelenkteils 2b heraus. An der den beiden voneinander beabstandeten Gelenken 2 gegenüberliegenden Seite des Deckels 1b sind im Bereich eines flanschartigen Ansatzes 1c zwei voneinander beabstandete Verschlusselemente 3 angeordnet, über die der Deckel 1b lösbar mit dem Grundteil 1a verbunden werden kann.

Des Weiteren ist an dem Deckel 1b seitlich im Bereich einer schmalen Seitenwand des Deckels 1b und der angrenzenden Deckelplatte 1e eine quaderförmige Vertiefung 4 vorgesehen, die eine ausreichende Größe aufweist, um Steckerelemente 5 einer nicht dargestellten Leitung zumindest teilweise innerhalb der Außenkontur des Gehäuses 1 aufzunehmen.

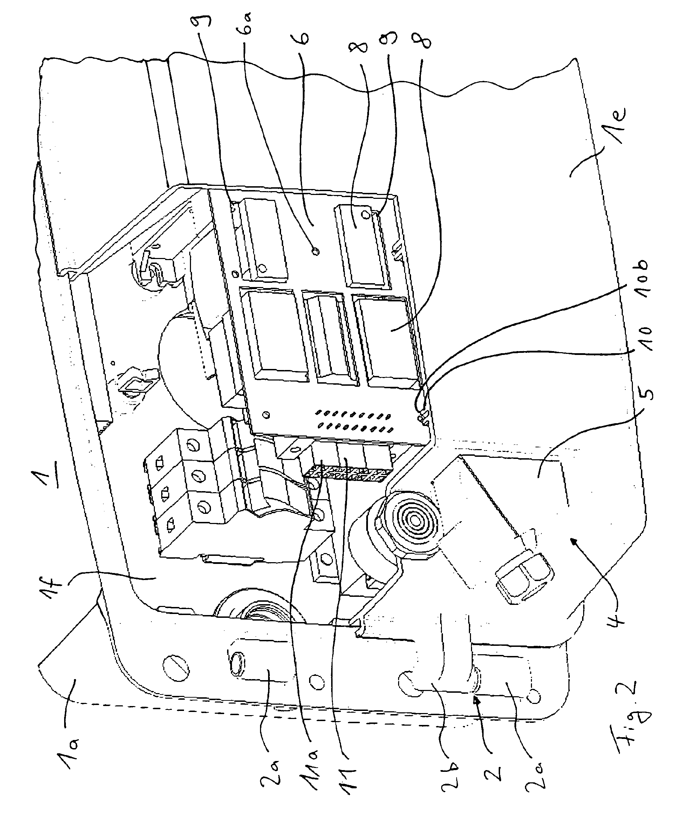

Die Figur 2 zeigt eine perspektivische Ansicht eines Ausschnitts des Gehäuses 1 nach Figur 1 aus dem Bereich des Gelenks 2. Hierbei ist der nach einer ersten Ausführungsform der Erfindung ausgestaltete Deckel 1b im Bereich einer seiner Ecken aufgebrochen dargestellt, um einen Einblick in das Innere 1f des Gehäuses 1 zu gewähren. Es ist ersichtlich, dass auf der Innenseite der Deckelplatte 1e eine Platine 6 ruht, die neben elektronischen Steuerbauteilen 7 (siehe Figur 3) auch elektro-mechanische Leistungsbauteile 8 wie beispielsweise Schütze zur Schaltung des Versorgungsstrom eines elektrischen Verbrauchers in Form eines nicht dargestellten Elektromotors trägt. Um die Leistungsbauteile 8 an der Platine 6 zu befestigen, sind in der Platine 6 im Wesentlichen rechteckige Aussparungen 9 vorgesehen, deren Abmessungen an die Außenabmessungen der Leistungsbauteile 8 angepasst sind. Die Leistungsbauteile 8 sind über nicht dargestellte Klemmbeziehungsweise Schnappverbindungen in den Aussparungen 9 der Platine 6 lösbar gehalten. Die Schnappverbindungen stehen somit im Eingriff mit zwei gegenüberliegenden Innenrändern der Aussparung 9. Eine seitliche Führung des Leistungsbauteils 8 erfolgt dann über die beiden verbleibenden Innenränder der Aussparung 9.

Die Platine 6 ist aus dünnem glasfaserverstärktem duroplastischem Material ausgeführt. Um die schweren Leistungsbauteile 8 im Betrieb dauerhaft tragen zu können, ist die Platine 6 mehrfach über Auflageelemente 10 auf der Innenseite der Deckelplatte 1e abgestützt. Die Auflageelemente 10 sind stiftförmig in Form von Befestigungsdomen ausgebildet und erstrecken sich rechtwinklig zu der Innenseite der Deckelplatte 1e. Diese Auflageelemente 10 sind speziell für gewindeformende Schrauben dimensioniert und an eine Herstellung des Deckels 1b als Kunststoffspritzgussteil angepasst. Die Platine 6 ist mit Bohrungen 6a versehen, in die stiftförmige Verlängerungen 10a der stufig sich nach oben verjüngenden Auflageelemente 10 einsteckbar sind. Durch die stufige Ausgestaltung weist das Auflageelement 10 eine ringförmige Auflagefläche 10b auf, auf der die Unterseite der Platine 6 dann ruht. Die stiftförmigen Verlängerungen 10a der Auflageelemente 10 dienen der seitlichen Fixierung der Platine 6. Befestigt wird die Platine 6 an den Auflageelemente 1 entweder über eine nicht dargestellte Schraube oder das der Deckelplatte 1e abgewandte Ende der stiftförmigen Verlängerungen 10a der Auflageelemente 10 ist mit einer lösbaren Schnappverbindung versehen. Die Verteilung der Auflageelemente 10 auf der Deckelplatte 1e in Bezug auf die Platine 6 ist so gewählt, dass die schweren Leistungsbauteile 8 schwingungsarm auch während des Maschinenbetriebs gehalten werden können und die Platine 6 optimal stützen. Die gesamte Elektrik wird an mehreren Stellen formschlüssig über diese Auflageelemente 10 mit dem Gehäuse 1 verbunden. Die Massekräfte der Leistungsbauteile 8 können somit wirksam in den Deckel 1b geleitet werden.

Des Weiteren ist in der Figur 2 gezeigt, dass auf die Platine 6 in einem an die Vertiefung 4 des Deckels 1b angrenzenden Randbereichs zwei Steckerbuchsen 11, von denen eine sichtbar ist, mit ihren Lötfahnen in entsprechende Bohrungen in der Platine 6 eingesteckt und mit dieser verlötet sind. In einer Seitenwand der Vertiefung 4 sind zwei fensterartige Öffnungen 12 vorgesehen, durch die das Buchsenteil 11a der Steckerbuchsen 11 nach außen ragt, um dort ein komplementär ausgebildetes Steckerelement 5 aufzunehmen. Diese Steckerbuchsen 11 dienen dazu, die Platine 6 elektrisch über die Steckerelemente 5 mit den anzusteuernden elektrischen Verbrauchern in Form der nicht dargestellten Elektromotoren des Hebezeuges lösbar zu verbinden. Hierbei ist das Steckerelement 5 so ausgebildet, dass bei auf der Steckerbuchse 11 aufgesteckten Steckerelement 5 das Steckerelement 5 gegen die Außenseite des Deckels 1b abdichtet und somit die Öffnung 12 der Steckerbuchse 11 abdichtet.

Die Figur 3 zeigt einen Querschnitt durch den Deckel 1b des Gehäuses 1. Hieraus ist klar ersichtlich, dass die Platine 6 auf den Auflageelementen 10 ruht und somit von der Innenseite des Deckels 1b beabstandet. Die Leistungsbauteile 8 ragen leicht - vorzugsweise wenige, d.h. 1 bis 5 mm, Millimeter - nach unten durch die Aussparungen 9 in Richtung der Innenseite des Deckels 1b hindurch. Dies ist ausreichend, um den Leistungsbauteilen 8 seitlichen Halt zu geben. Die Unterseite der Platine 6 ist etwa 6 bis 8 mm von der Innenseite des Deckels 1b beabstandet. Auch ist gezeigt, dass das Buchsenteil 11a der Steckerbuchse 11 durch die Öffnung 12 aus dem Inneren 11f des Gehäuses 1 herausragen.

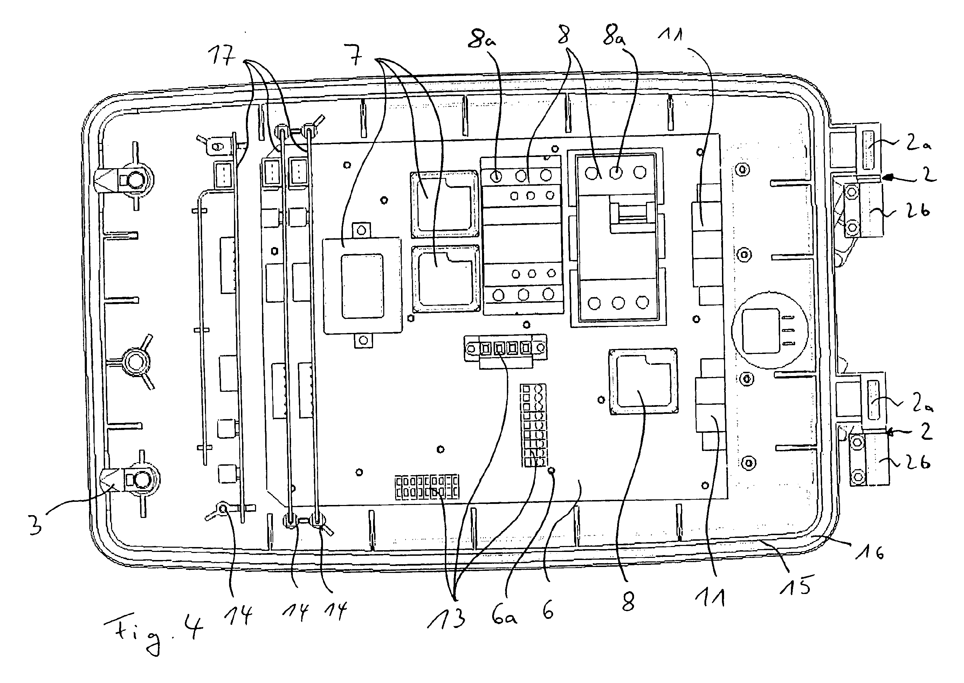

In der Figur 4 ist eine Draufsicht auf das Innere eines Deckels 1b und somit auf die Platine 6 dargestellt. Auf der Platine 6 ruhen in den Aussparungen 9 die Leistungsbausteine 8, die in der erforderlichen Weise zur Bildung einer Baueinheit mit der Platine fest mit dieser verdrahtet sind. Die Leistungsbausteine 8 weisen hierfür Steck- und/oder Klemmverbindungselemente 8a auf, die über nicht dargestellte elektrische Leitungen mit auf der Platine aufgelöteten Steck- und/oder Klemmleisten 13 verbunden sind. Es ist auch möglich, die elektrischen Leitungen ohne die Steck- und/oder Klemmleisten 13 direkt mit der Platine 6 zu verlöten; Hauptsache die Steck- und/oder Klemmverbindungselemente 8a bleiben erhalten. Um die Platine 6 elektrisch mit anderen Bauteilen oder einer Energiequelle verbinden zu können, sind weitere Steck- und/oder Klemmleisten 13 auf der Platine 6 vorhanden, die entsprechend mit den Leistungsbauteilen 8, den Steckerbuchsen 11 und den Steuerungsbauteilen 7 elektrisch verbunden sind. Hierbei sind die Steuerungsbauteile 7 fertig untereinander über die Platine 6 verschaltet, so dass nur die eingesteckten Leistungsbauteile 8 mit den Steck- und/oder Klemmleisten 13 elektrisch verbunden werden müssen. Die gesamte Platine 6 kann jedoch somit einbaufertig vorbereitet werden und ist nur über die Steckerbuchsen 11 und die Stecker- und/oder Klemmleisten 13 anzuschließen. Auch kann durch den durchgehenden Einsatz von Steckverbindungen für Verbindungen innerhalb des Gehäuse zwischen den Bauteilen im Grundteil 1a und im Deckel 1b des Gehäuses 1 sowie nach draußen zu den elektrischen Verbrauchern des Hebezeuges und den konsequenten Verzicht auf Schraub- oder Klemmverbindungen an diesen Stellen der zentrale Teil der Elektrik in Form der Platine 6 einfach installiert beziehungsweise im Servicefall ausgetauscht werden.

Auch weist der Deckel 1b Halterungen 14 auf, um hieran Steckkarten 17 lösbar zu befestigen, um den Funktionsumfang der Platine 6 nach Bedarf zu erweitern. Die Halterungen 14 sind im Spritzgussverfahren einfach herzustellen.

Außerdem weist der Deckel 1b eine umlaufende Nut 15, um hierin eine Dichtung 16 mit ringförmigen Querschnitt aufzunehmen. Über diese Dichtung 16 ist das Grundteil 1a über den Deckel 1b dichtend abschließbar.

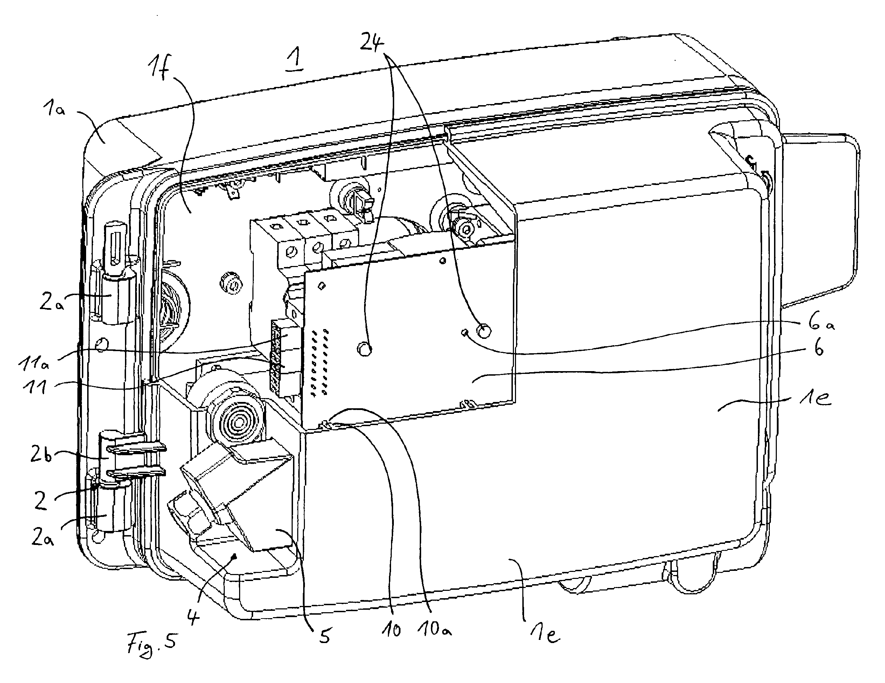

Die Figuren 5 bis 7 zeigen den Deckel 1b, insbesondere die hieran befestigte Platine 6, in einer zweiten Ausführungsform. Nachfolgend werden nur die Unterschiede zu der ersten Ausführungsform gemäß den Figuren 2 bis 4 beschrieben und im Übrigen wird auf die vorgehende Beschreibung verwiesen.

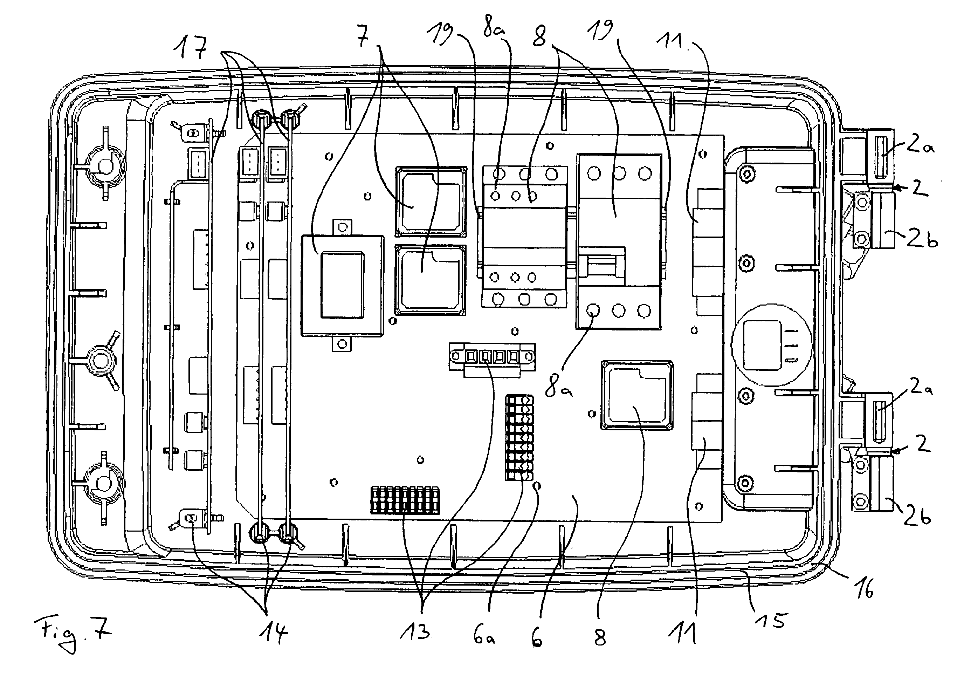

Die Figur 5 zeigt Gehäuse nach Figur 1 mit teilweise aufgeschnittenen Deckel 1b. Gegenüber der ersten Ausführungsform sind hier die Leistungsbauteile 8 nicht in Aussparungen 9 der Platine 6 befestigt sondern an einer Hutschiene 19 (siehe Figuren 6 und 7) über die üblichen Schnappverbindungen. Die Figur 5 zeigt hier von unten nur die Enden der beiden Befestigungsschrauben 24, über die die Hutschiene 19 auf der Oberseite der Platine 6 befestigt ist. Nicht dargestellt ist, dass zwischen der Unterseite der Hutschiene 19 und der Oberseite der Platine 6 eine elastisches Element, vorzugsweise in Form einer Scheibe vorgesehen ist, über die im Betrieb auftretende Schwingungen der Leistungsbauteile 8 kompensiert werden. Auch wird über das elastische Element durch eine entsprechende hülsenförmige Ausbildung eine elektrische Isolation der Befestigungsschrauben 24 gegenüber der Hutschiene 19 sowie der Hutschiene 19 gegenüber der Platine 6 erreicht.

In der Figur 6, die einen Querschnitt durch den Deckel 1b nach Figur 5 zeigt, ist ein kurzer Abschnitt der Hutschiene 19 zu erkennen. Der Rest der Hutschiene 19 ist von den daran befestigten Leistungsbauteilen 8 verdeckt.

Auch die Figur 7, in der eine Draufsicht auf den Innenbereich des Deckels 1b nach Figur 5 dargestellt ist, zeigt nur die nicht von den Leistungsbauteilen 8 verdeckten Bereiche der Hutschiene 19.

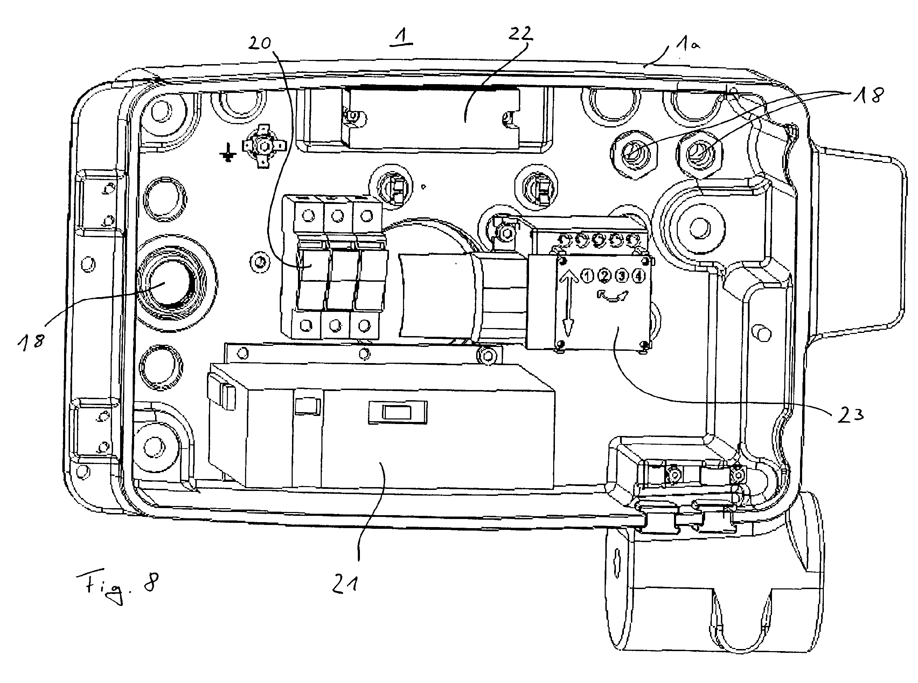

In der Figur 8 ist eine Draufsicht auf das Grundteil 1a des Gehäuses 1 dargestellt. Auf dem Boden des Grundteils 1a sind elektrische Komponenten wie Sicherungsautomaten 20, ein Frequenzumrichter 21, ein Bremswiderstand 22 und ein Getriebegrenzschalter 23 befestigt, die über nicht dargestellte Leitungen mit Steckern mit den Steck- und/oder Klemmleisten 13 der Platine 6 oder anderen elektrischen und/oder elektronischen Bauteilen verbunden werden. Das Grundteil 1a ist als integraler Bestand mit dem Hebezeug verbunden und über Bodenöffnungen 18 treten nicht dargestellte Versorgungs- und/oder Steuerleitungen in das Innere des Gehäuses 1 ein.

Im dem zuvor beschriebenen Ausführungsbeispiel ist das Gehäuse 1 mit seinem Grundteil 1a und seinem Deckelteil 1b aus Kunststoff und im Spritzgussverfahren hergestellt. Das Spritzgussverfahren erlaubt hier eine einfache kostengünstige Herstellung bei gleichzeitiger Integration vieler Teilfunktionen durch Ausbilden entsprechender Konstruktionselemente wie beispielsweise der Auflageelemente 10, der Nut 15 für die Dichtung 16, die Aufnahme des Verschlusselements 3 oder die Ausbildung des Gelenks 2. Durch die Ausführung der Gehäuses 1 in Kunststoff als elektrisch nicht leitendem Werkstoff ist es möglich, trotz der kompakten Bauweise und dem unmittelbaren Kontakt zu Spannung führenden Teilen die geforderten Isolationsklassen einzuhalten. Der eingesetzte Kunststoff ist hierzu mit einer entsprechenden Brandschutzausrüstung ausgestattet.

### Bezugszeichenliste

- 1: Gehäuse
- 1a: Grundteil
- 1b: Deckel
- 1c: Ansatz
- 1d: Öffnungen
- 1e: Deckelplatte
- 1f: Innere des Gehäuses 1
- 2: Gelenk
- 2a: erstes Gelenkteil
- 2b: zweites Gelenkteil
- 3: Verschlusselement
- 4: Vertiefung
- 5: Steckerelement
- 6: Platine
- 6a: Bohrungen
- 7: Steuerbauteil
- 8: Leistungsbauteil
- 8a: Steck- und/oder Klemmverbindungselemente
- 9: Aussparung
- 10: Auflageelement
- 11: Steckerbuchse
- 11a: Buchsenteil
- 12: Öffnung
- 13: Steck- und/oder Klemmleiste
- 14: Halterung
- 15: Nut
- 16: Dichtung
- 17: Steckkarte
- 18: Bodenöffnungen
- 19: Hutschiene
- 20: Sicherungsautomat
- 21: Frequenzumrichter
- 22: Bremswiderstand
- 23: Getriebegrenzschalter
- 24: Befestigungsschraube

## Patentansprüche

1. Anordnung mit an einer Platine (6) befestigten elektrischen und/oder elektronischen Leistungsbauteilen, wobei die elektrischen und/oder elektronischen Leistungsbauteile (8) mechanisch und lösbar an der Platine (6) befestigt sind,
**dadurch gekennzeichnet,**
**dass** die Leistungsbauteile (8) für ihren elektrischen Anschluss Steck - und/oder Klemmverbindungselemente (8a) aufweisen und die Steck- und/oder Klemmverbindungselemente (8a) über elektrische Leitungen im Sinne von Verdrahtungen vorzugsweise mit auf der Platine (6) angeordneten Steck - und/oder Klemmleisten (13) elektrisch mit der Platine (6) verbindbar sind, auf der die Leistungsbauteile (8) mechanisch befestigt sind.

2. Anordnung nach Anspruch 1, **dadurch gekennzeichnet, dass** in der Platine (6) mindestens eine Aussparung (9) angeordnet ist, die elektrischen und/oder elektronischen Leistungsbauteile (8) mechanisch und lösbar in die Aussparungen (9) eingesteckt sind und die Abmessungen der Aussparungen (9) an die Außenabmessungen der elektrischen und/oder elektronischen Leistungsbauteile (8) angepasst sind.

3. Anordnung nach Anspruch 1, **dadurch gekennzeichnet, dass** auf der Platine (6) mindestens eine Hutschiene (19) angeordnet ist, die elektrischen und/oder elektronischen Leistungsbauteile (8) mechanisch und lösbar an der Hutschiene (19) befestigt sind.

4. Anordnung nach einem der Ansprüche 1 bis 3, **dadurch gekennzeichnet, dass** die elektrischen und/oder elektronischen Leistungsbauteile (8) über Schnappverbindungen lösbar in den Aussparungen (9) beziehungsweise an der Hutschiene (19) gehalten sind.

5. Anordnung nach einem der Ansprüche 1 bis 4, **dadurch gekennzeichnet, dass** die elektrischen und/oder elektronischen Leistungsbauteile (8) über elektrische Leitungen mit der Platine (6) verdrahtet sind.

6. Gehäuse zur Aufnahme von elektrischen und/oder elektronischen LeistungsBauteilen, insbesondere zur Aufnahme der Steuerungs- und Leistungsbauteile für ein Hubwerk, mit einer Anordnung zum Befestigen von elektrischen und/oder elektronischen Leistungsbauteilen, an einer Platine, gemäß den Ansprüchen 2 bis 5, **dadurch gekennzeichnet, dass** die Platine (6) zumindest im Bereich der Aussparung (9) beziehungsweise der Hutschiene (19) über Auflageelemente (10) abgestützt ist, die mit dem Gehäuse (1) verbunden sind.

7. Gehäuse nach Anspruch 6, **dadurch gekennzeichnet, dass** die Auflageelemente (10) an der Innenseite der Deckelplatte (1e) des Gehäuses (1) angeordnet und stiftförmig sind sowie die Platine (6) und die elektrischen und/oder elektronischen Bauteilen durch die Auflageelemente (10) von der Deckelplatte (1e) des Gehäuses (1) beabstandet sind.

8. Gehäuse nach Anspruch 6 oder 7, **dadurch gekennzeichnet, dass** das Gehäuse (1) aus einem wannenförmigen Grundteil (1 a) und einem wannenförmigen Deckel (1 b) besteht und die Platine (6) in dem wannenförmigen Deckel (1 b) angeordnet ist.

9. Gehäuse nach Anspruch 8, **dadurch gekennzeichnet, dass** der Deckel (1b) über ein Gelenk (2) verschwenkbar mit dem Grundteil (1a) verbunden ist sowie der Deckel (1 b) über das Gelenk (2) von dem Grundteil (1a) lösbar ist.

10. Gehäuse nach Anspruch 8 oder 9, **dadurch gekennzeichnet, dass** an der Platine (6) in dem Deckel (1b) mindestens eine Steckerbuchse (11) und mindestens eine Steck- und/oder Klemmleiste (13) angeordnet sind, über die die Platine mit elektrischen und/oder elektronischen Steuerungs- (7) und Leistungsbauteilen (8) im Grundteil (1a) des Gehäuses (1) und mit elektrischen Verbraucher außerhalb des Gehäuses (1) verbindbar ist

11. Gehäuse nach Anspruch 10, **dadurch gekennzeichnet, dass** die Steckerbuchse (11) durch eine Öffnung (12) im Gehäuse (1) von außen zugänglich ist.

12. Gehäuse nach einem der Ansprüche 6 bis 11, **dadurch gekennzeichnet, dass** das Gehäuse (1) aus einem elektrisch nicht leitendem Werkstoff und vorzugsweise ein Kunststoffspritzgussteil ist.

## Claims

1. Arrangement having electrical and/or electronic power components fastened to a board (6), the electrical and/or electronic power components (8) being fastened to the board (6) mechanically and detachably, **characterised in that** the power components (8) have, for their electrical connection, insertion-type and/or clamping-type connecting members (8a), and the insertion-type and/or clamping-type connecting members (8a) can be electrically connected to the board (6), and preferably to insertion-type and/or clamping-type strips (13) arranged on the board (6), via electrical conductors in terms of wiring, to which board (6) the power components (8) are fastened mechanically.

2. Arrangement according to claim 1, **characterised in that** there is arranged in the board (6) at least one opening (9), the electrical and/or electronic power components (8) are inserted in the openings (9) mechanically and detachably, and the dimensions of the openings (9) are matched to the outside dimensions of the electrical and/or electronic power components (8).

3. Arrangement according to claim 1, **characterised in that** there is arranged on the board (6) at least one top hat rail (19), and the electrical and/or electronic power components (8) are fastened to the top hat rail (19) mechanically and detachably.

4. Arrangement according to one of claims 1 to 3, **characterised in that** the electrical and/or electronic power components (8) are detachably held in the openings (9) or on the top hat rail (19) by means of snap-action connections.

5. Arrangement according to one of claims 1 to 4, **characterised in that** the electrical and/or electronic power components (8) are wired to the board (6) by means of electrical conductors.

6. Housing to hold electrical and/or electronic power components, and in particular to hold the control and power components for a lifting unit, having an arrangement for fastening electrical and/or electronic power components to a board according to claims 2 to 5, **characterised in that**, at least in the region of the opening (9) or top hot rail (19), the board (6) is supported by means of members for contacting support (10) which are connected to the housing (1).

7. Housing according to claim 6, **characterised in that** the members for contacting support (10) are arranged on the inner side of the lid plate (1e) of the housing (1) and take the form of pins, and the board (6) and the electrical and/or electronic components are spaced away from the lid plate (1e) of the housing (1) by the members for contacting support (10).

8. Housing according to claim 6 or 7, **characterised in that** the housing (1) comprises a box-like base part (1a) and a troughed lid (1b) and the board (6) is arranged in the troughed lid (1 b).

9. Housing according to claim 8, **characterised in that** the lid (1 b) is pivotably connected to the base part (1 a) by means of a joint (2), and the lid (1 b) can be detached from the base part (1 a) by means of the joint (2).

10. Housing according to claim 8 or 9, **characterised in that** there are arranged on the board (6) in the lid (1 b) at least one socket (11) and at least one insertion-type and/or clamping-type strip (13) by means of which the board can be connected to electrical and/or electronic control (7) and power components (8) in the base part (1 a) of the housing (1) and to electrical loads outside the housing (1).

11. Housing according to claim 10, **characterised in that** the socket (11) is accessible from outside through an opening (12) in the housing (1).

12. Housing according to one of claims 6 to 11, **characterised in that** the housing (1) is made of an electrically non-conductive material and is preferably an injection moulding of plastics material.

## Revendications

1. Dispositif comportant des composants de puissance électroniques et/ou électriques fixés à une platine (6), les composants de puissance électroniques et/ou électriques (8) étant fixés mécaniquement et de manière amovible à la platine (6), **caractérisé en ce que**
pour les raccorder électriquement, les composants de puissance (8) comportent des éléments de liaison par serrage et/ou enfichage (8a) et les éléments de liaison par serrage et/ou enfichage (8a) peuvent être reliés électriquement à la platine (6), sur laquelle les composants de puissance (8) sont fixés mécaniquement, par des lignes électriques au sens de câblages comportant avantageusement des bornes de serrage et/ou d'enfichage (13) disposées sur la platine (6).

2. Dispositif selon la revendication 1, **caractérisé en ce que** au moins un évidement (9) est ménagé dans la platine (6), les composants de puissance électriques et/ou mécaniques (8) sont enfichés mécaniquement et de manière amovible dans les évidements (9) et les dimensions des évidements (9) sont adaptées aux dimensions extérieures des composants de puissance électroniques et/ou électriques (8).

3. Dispositif selon la revendication 1, **caractérisé en ce que** au moins un profilé chapeau (19) est disposé sur la platine (6), les composants de puissance électroniques et/ou électriques sont fixés mécaniquement et de manière amovible sur le profilé chapeau.

4. Dispositif selon l'une des revendications 1 à 3, **caractérisé en ce que** les composants de puissance électroniques et/ou électriques (8) sont maintenus de manière amovible dans les évidements (9) respectivement sur le profilé chapeau (19) par des liaisons par encliquetage.

5. Dispositif selon l'une des revendications 1 à 4, **caractérisé en ce que** les composants de puissance électroniques et/ou électriques (8) sont câblés à la platine (6) par des lignes électriques.

6. Boîtier de réception de composants de puissance électroniques et/ou électriques, notamment de réception des composants de puissance et de commande destinés à un treuil de levage, ledit boîtier comportant un dispositif de fixation de composants de puissance électroniques et/ou électriques à une platine conformément aux revendications 2 à 5, **caractérisé en ce que** la platine (6) est supportée, au moins dans la région de l'évidement (9) respectivement du profilé chapeau (19), par des éléments de support (10) qui sont reliés au boîtier (1).

7. Boîtier selon la revendication 6, **caractérisé en ce que** les éléments de support (10) sont en forme de tiges et sont disposés du côté intérieur de la plaque formant capot (1 e) du boîtier (1) et **en ce que** la platine (6) et les composants électroniques et/ou électriques sont écartés de la plaque formant capot (1 e) du boîtier (1) par les éléments de support (10).

8. Boîtier selon la revendication 6 ou 7, **caractérisé en ce que** le boîtier (1) est constitué d'une partie de base (1a) en forme de cuvette et d'un capot (1b) en forme de cuvette et **en ce que** la platine (6) est disposée dans le capot (1 b) en forme de cuvette.

9. Boîtier selon la revendication 8, **caractérisé en ce que** le capot (1 b) est relié à la partie de base (1a) par une articulation (2) de manière à pouvoir pivoter et **en ce que** le capot (1 b) est amovible de la partie de base (1a) par le biais de l'articulation (2).

10. Boîtier selon la revendication 8 ou 9, **caractérisé en ce que** au moins un contact femelle (11) et au moins une borne de serrage et/ou d'enfichage (13) sont disposés dans le couvercle (1) au niveau de la platine (6), au moyens desquels la platine peut être reliée aux composants de puissance (8) et de commande (7) électroniques et/ou électriques dans la partie de base (1a) du boîtier (1) et au récepteur électrique à l'extérieur du boîtier (1).

11. Boîtier selon la revendication 10, **caractérisé en ce que** le contact femelle (11) est accessible depuis l'extérieur par une ouverture (12) ménagée dans le boîtier (1).

12. Boîtier selon l'une des revendications 6 à 11, **caractérisé en ce que** le boîtier (1) est en une matière électriquement non conductrice et, de préférence, est une pièce de matière plastique moulée par injection.
